Europäisches Patentamt

(19) European Patent Office

Office européen des brevets

(11) Numéro de publication: **0 185 558**
**B1**

# (12) FASCICULE DE BREVET EUROPEEN

(45) Date de publication du fascicule du brevet: **16.01.91**

(21) Numéro de dépôt: **85401768.8**

(22) Date de dépôt: **12.09.85**

(51) Int. Cl.⁵: **G 05 B 19/18**, G 05 B 19/405

(54) **Procédé et dispositif d'aide au positionnement de pièces par superposition d'images.**

(30) Priorité: **24.09.84 FR 8414605**

(43) Date de publication de la demande:
**25.06.86 Bulletin 86/26**

(45) Mention de la délivrance du brevet:
**16.01.91 Bulletin 91/03**

(84) Etats contractants désignés:
**DE GB IT NL SE**

(56) Documents cités:
**FR-A-2 434 535**
**US-A-4 125 798**
**US-A-4 437 603**

(73) Titulaire: **AEROSPATIALE Société Nationale
Industrielle
37, Boulevard de Montmorency
F-75781 Paris Cédex 16 (FR)**

(72) Inventeur: **Lanne, Maurice
15 rue Didier Daurat
F-13700 Marignane (FR)**
Inventeur: **Petit, Jacques
30 rue Fauchier
F-13001 Marseille (FR)**
Inventeur: **Pons, Gérard
Chemin du Pas de la Nue
F-13170 Les Pennes-Mirabeau (FR)**
Inventeur: **Pauly, Francis
8 rue du Tambourin
F-84000 Avignon (FR)**

(74) Mandataire: **Bonnetat, Christian et al
CABINET BONNETAT 23, Rue de Léningrad
F-75008 Paris (FR)**

Courier Press, Leamington Spa, England.

**Description**

La présente invention concerne un procédé et un dispositif d'aide au positionnement de pièces par superposition d'images.

On remarquera que, par exemple par le document US-A-3 814 845, on connaît déjà des installations dans lesquelles le positionnement d'un objet est effectué automatiquement par traitement de données saisies par des caméras vidéo.

Contrairement à ces installations automatiques, la présente invention a essentiellement pour but d'aider au positionnement manuel de pièces à usiner et/ou à assembler, afin de simplifier les usinages et assemblages, en supprimant les outillages correspondants ou le traçage préalable de pièces à positionner.

Le document US-A-4 437 603 décrit un procédé d'aide au positionnement d'une pièce reposant sur un support, mettant en oeuvre un appareil de prise de vues de ladite pièce, à l'aide duquel on forme, sur l'écran d'un appareil d'affichage relié audit appareil de prise de vues, l'image de ladite pièce reposant sur ledit support. L'opérateur déplace manuellement ladite pièce sur ledit support jusqu'à ce que son image sur ledit écran occupe la position de travail désirée.

La présente invention a pour objet un procédé de ce type permettant d'établir une liaison directe entre la conception et la fabrication des pièces, tout en permettant de réduire les cycles de production et de supprimer les erreurs de recopie.

A cette fin, selon l'invention, le procédé d'aide au positionnement d'une pièce reposant sur un support, mettant en oeuvre un appareil de prise de vues de ladite pièce à l'aide duquel on forme sur l'écran d'un appareil d'affichage relié audit appareil de prise de vues, l'image de ladite pièce reposant sur ledit support, ladite pièce étant déplacée manuellement sur ledit support jusqu'à ce que son image sur ledit écran occupe la position désirée, est caractérisé en ce que:

a) on affiche, sur ledit écran, une mire fixe, à laquelle serait superposée l'image donnée par ledit appareil de prise de vues, d'un système de référence par rapport auquel doit être positionnée ladite pièce sur le support, dans le cas où ledit système de référence serait matérialisé sur ledit support;

b) on affiche, sur ledit écran, l'image d'un modèle de ladite pièce stockée dans une mémoire et l'image d'un système de repère lié de façon fixe audit modèle, ledit système de repère étant semblable audit système de références et ledit modèle occupant par rapport audit système de repère une position relative identique à celle occupée par ladite pièce par rapport audit système de référence, lorsque ladite pièce est correctement positionnée sur ledit support;

c) on amène l'image dudit système de repère du modèle en superposition avec ladite mire fixe; et

d) le déplacement de ladite pièce est effectué jusqu'à ce que son image sur ledit écran occupe, par rapport à ladite mire, la même position relative que l'image dudit modèle.

On fait en sorte que les images de ladite pièce et dudit modèle aient les mêmes dimensions, de sorte que le positionnement correct de la pièce sur le support est obtenu lorsque l'image de la pièce est amenée en coïncidence avec l'image du modèle.

La mise en superposition de l'image du système de repère du modèle et de la mire fixe peut être volontaire ou automatique.

Avantageusement, un dispositif d'aide au positionnement, par rapport à un système de référence, d'une pièce reposant sur un support, est remarquable en ce qu'il comporte:

un appareil d'affichage pourvu d'un écran;

un appareil de prise de vues susceptible de former sur ledit écran, l'image de ladite pièce reposant sur ledit support;

des moyens pour faire apparaître, sur ledit écran, une mire fixe à laquelle serait superposée l'image dudit système de référence vu par ledit appareil de prise de vues, dans le cas où ledit système de référence serait matérialisé sur ledit support;

des moyens pour faire apparaître, sur ledit écran, l'image d'un modèle de ladite pièce et l'image d'un système de repère lié de façon fixe audit modèle, ledit système de repère étant semblable audit système de référence et ledit modèle occupant par rapport audit système de repère une position relative identique à celle occupée par ladite pièce par rapport audit système de référence, lorsque ladite pièce est correctement positionnée sur ledit support; et

des moyens pour amener l'image dudit système de repère du modèle en superposition avec ladite mire fixe.

Un tel dispositif comporte avantageusement une mémoire dans laquelle est emmagasiné ledit modèle.

Dans un mode avantageux de réalisation, le dispositif selon l'invention comporte une base de données centrale, dans laquelle est emmagasiné ledit modèle, un ordinateur local pouvant dialoguer avec ladite base de données centrale et un multiplexeur recevant des informations dudit ordinateur local et dudit appareil de prise de vues.

Les figures du dessin annexé feront bien comprendre comment l'invention peut être réalisée. Sur ces figures, des références identiques désignent des éléments semblables.

La figure 1 est un schéma synoptique illustrant schématiquement le procédé et le dispositif conformes à la présente invention.

La figure 2 montre schématiquement la structure d'un dispositif selon l'invention, incorporé à un système informatique de production industrielle.

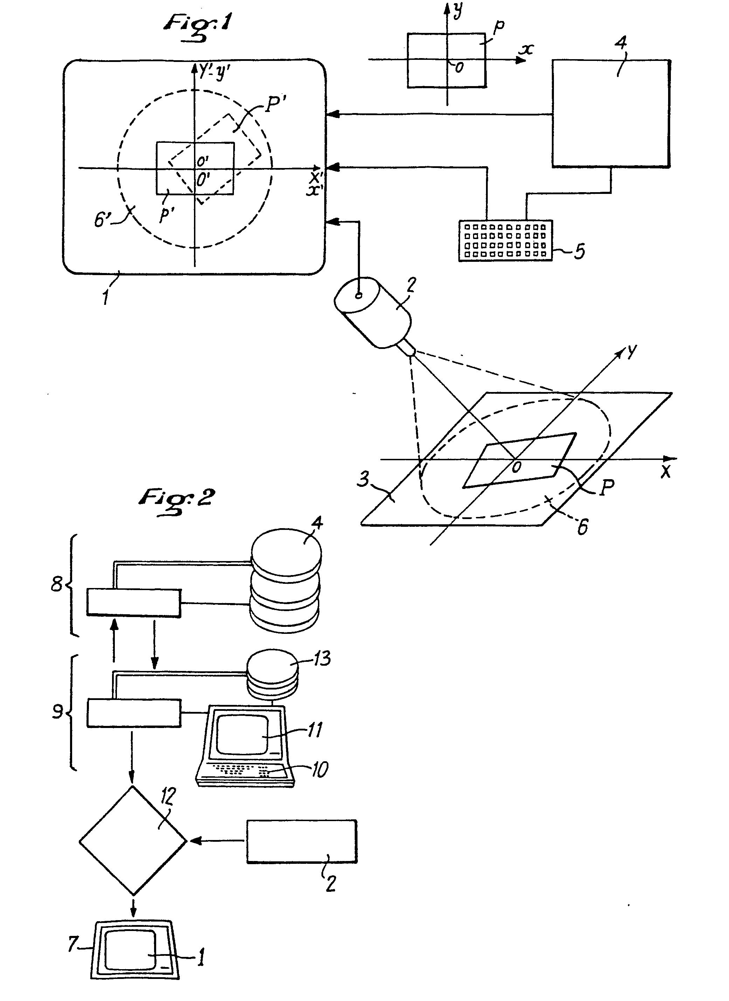

Le dispositif selon l'invention, montré schématiquement sur la figure 1, comporte un appareil de télévision schématisé par son écran 1 et relié à une caméra de télévision 2. La caméra de télévision 2 observe une pièce P reposant sur un support 3 et devant être positionnée par rapport à un système d'axes de référence OX,OY liés audit support 3.

Ainsi, l'image P' de la pièce P apparaît sur l'écran

1. Sur la figure 1, on a représenté le système de référence OX,OY pour la commodité de l'exposé, alors que, en réalité, ce système de référence peut n'avoir aucun réalité matérielle.

L'appareil de télévision fait également apparaître, sur son écran 1, une mire fixe O'X',O'Y', à laquelle serait exactement superposée l'image du système de référence OX,OY vue par la caméra 2, dans le cas où ledit système de référence OX,OY serait matérialisé sur le support 3.

De plus, sur l'écran 1 apparaît l'image p' d'un modèle p de la pièce P. Le modèle p est par exemple emmagasiné dans une mémoire 4 et adressé sur demande à l'appareil de télévision. Ce modèle p est lié de façon intangible à un système d'axes de repère ox,oy et il occupe, par rapport audit système de repère, une position identique à celle occupée par la pièce P par rapport au système de référence OX,OY lorsqu'elle est correctement positionnée sur son support 3. Ainsi, sur l'écran 1 apparaît également l'image o'x',o'y' du système de repère ox,oy.

Les divers grossissements et réglages sont de préférence choisis pour que, sur l'écran 1, les images P' et p' aient des dimensions identiques.

L'image o'x',o'y' du système de repère ox,oy est amenée en superposition avec la mire fixe O'X',O'Y' soit automatiquement par l'appareil de télévision, soit par commande volontaire à l'aide d'un organe de commande 5.

Par suite, sur l'écran 1, l'image p' du modèle p occupe alors, par rapport à la mire fixe O'X',O'Y', la position (illustrée sur la figure 1) que la pièce P devrait occuper par rapport au système de référence OX,OY.

Il suffit donc, pour positionner la pièce P par rapport au système de référence OX,OY, de déplacer ladite pièce sur son support 3, jusqu'à ce que son image P' vienne en superposition exacte avec l'image p' du modèle p.

Bien entendu, quoique sur la figure 1, on ait représenté le dispositif selon l'invention en supposant que le champ 6 de la caméra 2 était suffisamment large pour englober la totalité de la pièce P, il va de soi que la caméra pourrait ne donner sur l'écran 1 qu'une image partielle de la pièce P. Dans ce cas, le positionnement correct de cette pièce serait obtenu par mise en superposition de points remarquable de l'image P' avec les points remarquables correspondant de l'image p'.

Sur la figure 2, on a représenté le schéma synoptique d'un dispositif selon l'invention, incorporé à un système informatique de production industrielle. On y retrouve l'appareil de télévision (portant la référence 7) pourvue de son écran 1, la caméra 2 et la mémoire 4.

La mémoire 4 est la mémoire centrale d'un ordinateur central 8, en liaison avec au moins un ordinateur local 9 pourvu d'un clavier de commande 10 (dont fait partie l'organe 5) et d'un écran de contrôle 11. L'ordinateur central 8 contient les bases de données correspondant à des modèles p.

L'opérateur peut dialoguer avec l'ordinateur 9 et l'ordinateur central 8 par l'intermédiaire du clavier 10. Il introduit l'identité de la pièce recherchée. Une image p' du modèle de celle-ci apparaît sur l'écran de contrôle 11. L'image p' est transmise à l'appareil de télévision 7 par l'intermédiaire d'un multiplexeur 12 auquel est également relié la caméra 2. L'image p' peut être transmise directement de l'ordinateur central 4 à l'appareil 7 ou par l'intermédiaire d'une mémoire locale 13.

Lorsque la coïncidence des images p' et P' est obtenue, l'opérateur valide l'opération de positionnement.

On voit ainsi que l'invention permet d'établir une liaison directe entre la conception et la fabrication.

Elle permet de réduire les cycles de production et de supprimer les erreurs de recopie.

De plus, elle est d'une mise en oeuvre aisée, car elle n'utilise que des matériels existants et ne nécessite pas d'important développement informatique.

**Revendications**

1. Procédé d'aide au positionnement d'une pièce (P) reposant sur un support (3), mettant en oeuvre un appareil de prise de vues de ladite pièce, à l'aide duquel on forme sur l'écran (1) d'un appareil d'affichage relié audit appareil de prise de vues (2), l'image (P') de ladite pièce (P) reposant sur ledit support (3), ladite pièce étant déplacée manuellement sur ledit support jusqu'à ce qe son image sur ledit écran occupe la position désirée, caractérisé en ce que:

a) on affiche, sur ledit écran (1), une mire fixe (O'X',O'Y'), à laquelle serait superposée l'image donnée par ledit appareil de prise de vues (2), d'un système de référence (OX,OY) par rapport auquel doit être positionnée ladite pièce sur le support (3), dans le cas où ledit système de référence (OX,OY) serait matérialisé sur ledit support (3);

b) on affiche, sur ledit écran (1), l'image (p') d'un modèle (p) de ladite pièce (P) stocké dans une mémoire et l'image (o'x',o'y') d'un système de repère (ox,oy) lié de façon fixe audit modèle (p), ledit système de repère (ox,oy) étant semblable audit système de références (OX,OY) et ledit modèle (p) occupant par rapport audit système de repère (ox,oy) une position relative identique à celle occupée par ladite pièce (P) par rapport audit système de référence (OX,OY), lorsque ladite pièce (P) est correctement positionnée sur ledit support (3);

c) on amène l'image (o'x',o'y') dudit système de repère (ox,oy) du modèle (p) en superposition avec ladite mire fixe (O'X',O'Y'); et

d) le déplacement de ladite pièce est effectué jusqu'à ce que son image (P') sur ledit écran (1) occupe, par rapport à ladite mire (O'X',O'Y'), la même position relative que l'image (p') dudit modèle (p).

2. Procédé selon la revendication 1, caractérisé en ce que, sur ledit écran (1), les images (P') de la pièce (P) et (p') du modèle (p) ont les mêmes dimensions, de sorte que le positionnement correct de la pièce (P) sur le support (3) est obtenu lorsque l'image (P') de la pièce (P) est amenée en coïncidence avec l'image (p') du modèle (p).

3. Procédé selon la revendication 1, caractérisé en ce que l'image (o'x',o'y') du système de repère (ox,oy) du modèle (p) est amenée en superposition avec la mire fixe (O'X',O'Y') par action volontaire d'un opérateur sur un organe de commande (5).

4. Procédé selon la revendication 1, caractérisé en ce que l'image (o'x',o'y') du système de repère (ox,oy) du modèle (p) est amenée en superposition avec la mire fixe (O'X',O'Y') par action automatique de l'appareil d'affichage.

5. Dispositif d'aide au positionnement, par rapport à un système de référence (OX,OY) d'une pièce (P) reposant sur un support (3), caractérisé en ce qu'il comporte:

un appareil d'affichage (7) pourvu d'un écran (1);

un appareil de prise de vues (2) susceptible de former, sur ledit écran (1), l'image (P') de ladite pièce (P) reposant sur ledit support (3);

des moyens pour faire apparaître, sur ledit écran (1), une mire fixe (O'X',O'Y') à laquelle serait superposée l'image dudit système de référence (OX,OY) vu par ledit appareil de prise de vues (2), dans le cas où ledit système de référence (OX,OY) serait matérialisé sur ledit support (3);

des moyens pour faire apparaître, sur ledit écran (1), l'image (p') d'un modèle (p) de ladite pièce (P) et l'image (o'x',o'y') d'un système de repère (ox,oy) lié de façon fixe audit modèle (p), ledit système de repère (ox,oy) étant semblable audit système de référence (OX,OY) et ledit modèle (p) occupant par rapport audit système de repère (ox,oy) une position relative identique à celle occupée par ladite pièce (P) par rapport audit système de référence (OX,OY), lorsque ladite pièce (P) est correctement positionnée sur ledit support (3); et

des moyens pour amener l'image (o'x',o'y') dudit système de repère (ox,oy) du modèle (P) en superposition avec ladite mire fixe (O'X',O'Y').

6. Dispositif selon la revendication 5, caractérisé en ce qu'il comporte une mémoire (4) dans laquelle est emmagasiné ledit modèle (p).

7. Dispositif selon la revendication 6, caractérisé en ce qu'il comporte une base de données centrale (8), dans laquelle est emmagasiné ledit modèle (p), un ordinateur local (9) pouvant dialoguer avec ladite base de données centrale (8) et un multiplexeur recevant des informations dudit ordinateur local (9) et dudit appareil de prise de vues (2).

**Patentansprüche**

1. Hilfsverfahren zur Lageeinstellung eines auf einer Auflage (3) ruhenden Werkstückes (P), indem ein Aufnahmegerät eingesetzt wird, vermittels dessen auf dem Bildschirm (1) eines mit dem Aufnahmegerät (2) verbundenen Anzeigegerätes ein Bild (P') des auf der Auflage ruhenden Werkstückes (P) gebildet wird, das von Hand auf der Auflage solange verschoben wird, bis dessen Abbild auf dem Bildschirm die gewünschte Stellung einnimmt, dadurch gekennzeichnet, daß

a) auf dem Bildschirm (1) eine feste Visierung (O'X',O'Y'), auf die das vom Aufnahmegerät (2) gelieferte Abbild zu überlagern wäre, eines Bezugssystems (OX,OY) angezeigt wird, demgegenüber das Werkstück auf der Auflage (3) positioniert werden soll, für den Fall, daß das Bezugssystem (OX,OY) auf der Auflage (3) markiert werden würde;

b) auf dem Bildschirm (1) das Abbild (p') eines in einem Speicher eingelesenen Vorbildes (p) des Werkstückes (P) und ein Bild (o'x',o'y') eines auf feste Weise mit dem Vorbild (p) verbundenen Bezugssystemes (ox,oy) angezeigt werden, wobei das Bezugssystem (ox,oy) dem Bezugssystem (OX,OY) ähnlich ist und das Vorbild (p) gegenüber dem Bezugssystem (ox,oy) eine relative, zu der gegenüber dem Bezugssystem (OX,OY) vom Werkstück (P) eingenommenen Stellung identische Stellung einnimmt, wenn das Werkstück (P) auf der Auflage (3) richtig positioniert ist;

c) das Bild (o'x',o'y') des Bezugssystemes (ox,oy) des Vorbildes (p) mit der festen Visierung (O'X',O'Y') zur Überlagerung gebracht wird, und

d) die Verschiebung des Werkstückes solange durchgeführt wird, bis sein Abbild (P') auf dem Bildschirm (1) gegenüber der Visierung (O'X',O'Y') dieselbe relative Stellung wie das Abbild (p') des Vorbildes (p) einnimmt.

2. Verfahren nach Anspruch 1, dadurch gekennzeichnet, daß auf dem Bildschirm (1), die Abbilder (P') des Werkstückes (P) und (p') des Vorbildes (p) dieselben Abmessungen haben, so daß die richtige Positionierung des Werkstückes (P) auf der Auflage (3) erzielt wird, wenn das Abbild (P') des Werkstückes (P) mit dem Abbild (p') des Vorbildes (p) zur Koinzidenz gebracht wird.

3. Verfahren nach Anspruch 1, dadurch gekennzeichnet, daß das Bild (o'x',o'y') des Bezugssystemes (ox,oy) des Vorbildes (p) durch beabsichtigte Einwirkung einer Bedienungsperson auf ein Stellglied (5) mit der festen Visierung (O'X',O'Y') zur Überlagerung gebracht wird.

4. Verfahren nach Anspruch 1, dadurch gekennzeichnet, daß das Bild (o'x',o'y') des Bezugssystemes (ox,oy) des Vorbildes (p) durch selbsttätiges Einwirken des Anzeigegerätes mit der festen Visierung (O'X',O'Y') zur Überlagerung gebracht wird.

5. Hilfsgerät zur Lageeinstellung gegenüber einem Bezugssystem (OX,OY) eines auf einer Auflage (3) ruhenden Werkstückes (P), gekennzeichnet durch

ein mit einem Bildschirm (1) versehenes Anzeigegerät (7);

ein Aufnahmegerät (2), das in der Lage ist, auf dem Bildschirm (1) das Abbild (P') des auf der Auflage (3) ruhenden Werkstückes (P) zu bilden;

Mittel, um auf dem Bildschirm (1) eine feste Visierung (O'X',O'Y') erscheinen zu lassen, auf die das vom Aufnahmegerät (2) gesehene Abbild des Bezugssystemes (OX,OY) zu überlagern wäre, für den Fall, daß das Bezugssystem (OX,OY) auf der Auflage (3) markiert werden würde;

Mittel, um auf dem Bildschirm (1) das Abbild (p') eines Vorbildes (p) des Werkstückes (P) und das Bild (o'x',o'y') eines auf feste Weise mit dem Vorbild (p) verbundenen Bezugssystemes (ox,oy) erscheinen zu lassen, wobei das Bezugssystem (ox,oy) dem Bezugssystem (OX,OY) ähnlich ist und das Vorbild (p) gegenüber dem Bezugssystem (ox,oy) eine relative, zu der gegenüber dem Bezugssystem (OX,OY) vom Werkstück (P) eingenommenen Stellung identische Stellung einnimmt, wenn das Werkstück (P) auf der Auflage (3) richtig positioniert ist, und

Mittel, durch die das Bild (o'x',o'y') des Bezugssystemes (ox,oy) des Vorbildes (p) mit der festen Visierung (O'X',O'Y') zur Überlagerung gebracht wird.

6. Hilfsgerät nach Anspruch 5, dadurch gekennzeichnet, daß es einen Speicher (4) aufweist, in dem das Vorbild (p) eingespeichert ist.

7. Hilfsgerät nach Anspruch 6, dadurch gekennzeichnet, daß es eine zentrale Datenbasis (8), in der das Vorbild (p) eingespeichert ist, einen lokalen Computer (9), durch den mit der zentralen Datenbasis (8) ein Informationsaustausch geführt werden kann, und eine Datenübertragungseinheit aufweist, von den Informationen des lokalen Computers (9) und des Aufnahmegerätes (2) empfangen werden.

## Claims

1. Process for assisting the positioning of a workpiece (P) resting on a support (3), carrying out a workpiece filming apparatus, with which the image (P') of said workpiece (P) resting on said support (3) is formed on the screen (1) of a display apparatus connected to said filming apparatus (2), said workpiece being manually displaced on said support until its image on said screen occupies the desired position, characterized by the following steps:

a) displaying, on said screen (1), a fixed test pattern (O'X',O'Y') on which is superposed the image given by said filming apparatus (2), of a reference system (OX,OY) which respect to which said workpiece on the support (3) is to be positioned, in the event of said reference system (OX,OY) being materialized on said support (3);

b) displaying on said screen (1) the image (p') of a model (p) of said workpiece (P) stored in a memory and the image (o'x',o'y') of a marking system (ox,oy) fixedly connected to said model (p), said marking system (ox,oy) being similar to said reference system (OX,OY) and said model (p) occupying with respect to said marking system (ox,oy) a relative position identical to that occupied by said workpiece (P) with respect to said reference system (OX,OY), when said workpiece (P) is correctly positioned on said support (3);

c) bringing the image (o'x',o'y') of said marking system (ox,oy) of the model (p) in superposition with said fixed test pattern (O'X',O'Y'); and

d) displacing said workpiece until its image (P') on said screen (1) occupies, with respect to said test pattern (O'X',O'Y'), the same relative position as the image (p') of said model (p).

2. Process according to claim 1, characterized in that on said screen (1), the images (P') of the workpiece (P) and (p') of the model (p) have the same dimensions, with the result that correct positioning of the workpiece (P) on the support (3) is obtained when the image (P') of the workpiece (P) is brought into register with the image (p') of the model (p).

3. Process according to claim 1, characterized in that the image (o'x',o'y') of the marking system (ox,oy) of the model (p) is brought into superposition with the fixed test pattern (O'Y',O'Y') by voluntary action of an operator on a control member (5).

4. Process according to claim 1, characterized in that the image (o'x',o'y') of the marking system (ox,oy) of the model (p) is brought into superposition with the fixed test pattern (O'X',O'Y') by automatic action of the display apparatus.

5. Device for assisting positioning, with respect to a reference system (OX,OY), of a workpiece (P) resting on a support (3), characterized in that it comprises:

a display apparatus (7) provided with a screen (1);

a filming apparatus (2) capable of forming on said screen (1) the image (P') of said workpiece (P) resting on said support (3);

means for showing on said screen (1) a fixed test pattern (O'X',O'Y') on which is superposed the image of said reference system (OX,OY) viewed by said filming apparatus (2), in the event of said reference system (OX,OY) being materialized on said support (3);

means for showing on said screen (1) the image (p') of a model (p) of said workpiece (P) and the image (o'x',o'y') of a marking system (ox,oy) fixedly connected to said model (p), said marking system (ox,oy) being similar to said reference system (OX,OY) and said model (p) occupying with respect to said marking system (ox,oy) a relative position identical to that occupied by said workpiece (P) with respect to said reference system (OX,OY), when said workpiece (P) is correctly positioned on said support (3); and

means for bringing the image (o'x',o'y') of said marking system (ox,oy) of the model (p) in superposition with said fixed test pattern (O'X',O'Y').

6. Device according to claim 5, characterized in that it comprises a memory (4) in which said model (p) is stored.

7. Device according to claim 6, characterized in that it comprises a central data base (8), in which said model (p) is stored, a local computer (9) adapted to dialogue with said central data base (8) and a multiplexer receiving information from said local computer (9) and said filming apparatus (2).

Fig.1

Fig.2